# EUROPEAN PATENT SPECIFICATION

(11) **EP 3 128 106 B1**
(45) Date of publication and mention of the grant of the patent: **25.07.2018**
(21) Application number: 15179997.0
(22) Date of filing: 06.08.2015
(51) Int. Cl.: H04N 7/14, G09B 5/06, H04N 7/18, G09B 5/00, G06F 3/01, E04H 3/00

(54) **LECTURE SYSTEM, INFORMATION PROCESSING APPARATUS, AND STORAGE MEDIUM**
VORTRAGSSYSTEM, INFORMATIONSVERARBEITUNGSVORRICHTUNG UND SPEICHERMEDIUM
SYSTÈME DE LECTURE, APPAREIL DE TRAITEMENT D'INFORMATIONS ET SUPPORT DE STOCKAGE

(43) Date of publication of application: 08.02.2017
(73) Proprietor: Toshiba TEC Kabushiki Kaisha, Tokyo 0141-8562 (JP)
(72) Inventor: SERIZAWA, Yasutoshi, Shinagawa-ku, Tokyo 141-0032 (JP)
(74) Representative: Takeuchi, Maya

(56) References cited:
- KR-A- 20080 078 750
- US-A1- 2007 081 080
- "Lecture Capture: What Can Be Automated?", , 1 January 2007 (2007-01-01), XP055247088, Retrieved from the Internet: URL:https://www.educause.edu/ir/library/pd f/eqm0725.pdf [retrieved on 2016-02-03]
- EROL B ET AL: "An Overview of Technologies for E-Meeting and E-Lecture", IEEE INTERNATIONAL CONFERENCE ON MULTIMEDIA AND EXPO, 2005. ICME 2005. AMSTERDAM, THE NETHERLANDS, 06-08 JULY 2005, IEEE, PISCATAWAY, NJ, USA, 6 July 2005 (2005-07-06), pages 1000-1005, XP010843210, DOI: 10.1109/ICME.2005.1521593 ISBN: 978-0-7803-9331-8

## Description

### FIELD

Embodiments described herein relate generally to a technique for efficiently delivering a lecture in a seminar room.

### BACKGROUND

When a lecture is held in a high school or a university, if a seminar room is spacious, it is hard for participants in the back of the room to see a lecturer and videos of lecture materials prepared by lecturer because the participants are far from the lecturer and the videos. Further, if the seminar room is spacious, for example, the lecturer cannot overlook the entire room and, in particular, cannot see if lecture content is communicated to the participant in the back. Document KR 2008 0078750 A describes a system enabling a lecturer placed in a main lecture room to provide an active video lecture to students placed in this main lecture room and also to students placed in a remote lecture room. This system comprises wireless student terminals installed in each student seat and displaying said lecture and a lecture relay relaying information between the wireless student terminals and a lecture relay supporting server. The main lecture room includes a lecturer terminal processing a lecture by communicating with the student terminals through the lecture relay, and a lecturer camera capturing and transmitting a lecture image to the lecture relay supporting server.

### SUMMARY OF THE INVENTION

We propose a lecture system comprising:
a first display section set on one side surface of a wall that divides one room into two rooms, set to be seen by participants present in a first room, which is one divided room, and configured to display a material of a lecture;
a second display section set on a side surface on an opposite side of the surface of the wall on which the first display section is set, set to be seen by participants present in a second room, which is the other divided room, and configured to display a material including content same as content of the material displayed by the first display section;
a first image pickup section disposed in the first room and configured to pick up an image of a lecturer;
a server configured to receive the image picked up by the first image pickup section and create an image formed by segmenting the image of the lecturer; and
a first projecting section configured to project the image created by the server toward the wall of the second room.

Advantageously and in a nonlimiting manner, the system further comprises:
a sensor set in a passageway between the first room and the second room and configured to detect passage of the lecturer;
a second image pickup section disposed in the second room and configured to pick up an image of the lecturer; and
a second projecting section configured to project, toward the wall of the first room, an image created by the server on the basis of the image picked up by the second image pickup section, wherein
when the sensor detects the passage of the lecturer, the server receives the image picked up by the second image pickup section, creates an image formed by segmenting the image of the lecturer, and transmits the created image to the second projecting section.

Advantageously and in a nonlimiting manner, the system further comprises:
a third image pickup section configured to pick up an image of participants present in the first room; and
a fourth image pickup section configured to pick up an image of participants present in the second room.

Advantageously and in a nonlimiting manner, the first display section displays, in a part of a display region, the image picked up by the fourth image pickup section, and
the second display section displays, in a part of a display region, the image picked up by the third image pickup section.

Advantageously and in a nonlimiting manner, the system further comprises:
a microphone configured to collect voice of the lecturer;
a first speaker set in the first room and configured to output the voice of the lecturer collected by the microphone; and
a second speaker set in the second room and configured to output voice obtained by translating the voice of the lecturer collected by the microphone into another language.

Advantageously and in a nonlimiting manner, the server receives data of the voice of the lecturer collected by the microphone, translates the data into the other language, and outputs the translated voice data to the second speaker.

Advantageously and in a nonlimiting manner, the server receives the images picked up by the third image pickup section and the fourth image pickup section and determines attendance of the respective participants on the basis of images of faces of the participant participating in the lecture. Advantageously and in a nonlimiting manner, the system further comprises a plurality of vibrators configured to give vibration to the respective participants and vibrate when receiving information from the server, wherein
the server specifies, on the basis of the images picked up by the third image pickup section and the fourth image pickup section, a participant looking down for a fixed period and transmits the information to the vibrator of the specified participant.

The invention also relates to an information processing apparatus comprising:
an interface section configured to receive an image from a first image pickup section that picks up an image of a lecturer present in a first room; and
a control section configured to control a first display section set in the first room to display a material of a lecture, control a second display section set in a second room to display a material including content same as content of the material, create an image obtained by segmenting the image of the lecturer from the image received by the interface section, and control the interface section to transmit the created image to a first projecting section that projects an image toward a wall of the second room on which the second display section is set.

Advantageously and in a nonlimiting manner, the interface section further receives information indicating detection of passage of the lecturer from a sensor that is set in a passageway between the first room and the second room and detects passage of the lecturer and receives an image from a second image pickup section that is disposed in the second room and picks up an image of the lecturer, and
the control section further creates, when the interface section receives the information, an image formed by segmenting the image of the lecturer from the image picked up by the second image pickup section and controls the interface section to transmit the created image to a second projecting section that projects the image toward a wall of the first room on which the first display section is set.

Advantageously and in a nonlimiting manner, the interface section is configured to receive an image from a third image pickup section that picks up an image of participants present in the first room; and is configured to receive an image from a fourth image pickup section that picks up an image of participants present in the second room,
the control section further controls the interface section to transmit the image picked up by the fourth image pickup section to the first display section displays, in a part of a display region, and to transmit the image picked up by the third image pickup section to the second display section, in a part of a display region.

Advantageously and in a nonlimiting manner, the interface section is configured to receive sound data collected by a microphone configured to collect voice of the lecturer,
the control section further obtains a translation of the voice of the lecturer collected by the microphone into another language, and controls the interface section to output the voice of the lecturer collected by the microphone to a first speaker set in the first room, and to output the voice obtained by the translation to a second speaker set in the second room.

Advantageously and in a nonlimiting manner, the voice translation is operated by the control section.

Advantageously and in a nonlimiting manner, the interface section is configured to receive an image of the participants present in the first room picked up by a third image pickup section, to receive an image of the participants present in the second room picked up by a fourth image pickup section,
the control section further determines attendance of the respective participants on the basis of the images received of the faces of the participant participating in the lecture.

Advantageously and in a nonlimiting manner, the interface section is configured to receive an image of the participants present in the first room picked up by a third image pickup section, to receive an image of the participants present in the second room picked up by a fourth image pickup section, and to control a plurality of vibrators configured to give vibration to the respective participants,
the control section further specifies, on the basis of the images picked up by the third image pickup section and the fourth image pickup section, a participant looking down for a fixed period and controls the interface section to give a vibration to the specified participant.

The invention also relates to a storage medium having a computer program stored therein, the computer program causing a computer to execute processing for:
controlling a first display section set in a first room to display a material of a lecture;
controlling a second display section set in a second room to display a material including content same as content of the material;
receiving an image from a first image pickup section that picks up an image of a lecturer present in the first room;
creating an image formed by segmenting the image of the lecturer from the received image; and
transmitting the created image to a first projecting section that projects an image toward a wall of the second room on which the second display section is set.

### DESCRIPTION OF THE DRAWINGS

FIG. 1 is a diagram showing a configuration example of a lecture system in a first embodiment;
FIG. 2 is a diagram showing a configuration example of a seminar room in the first embodiment viewed from above;
FIG. 3 is a diagram showing a configuration example of a seminar room in the past viewed from above;
FIG. 4 is a block diagram showing a configuration example of a management server in the first embodiment;
FIG. 5 is a diagram showing how a screen is seen for participants in one room;
FIG. 6 is a diagram showing how a screen is seen for participants in the other room;
FIG. 7 is a diagram in which movement of a lecturer in the seminar room in the first embodiment is indicated by an arrow;
FIG. 8 is a flowchart for explaining an operation example of a management server in the first embodiment;
FIG. 9 is a diagram showing a configuration example of a seminar room in a second embodiment viewed from above;
FIG. 10 is a flowchart for explaining an operation example of a management server in the second embodiment;
FIG. 11 is a diagram showing a configuration example of a seminar room in a third embodiment viewed from above;
FIG. 12 is a flowchart for explaining an operation example of attendance determination in the third embodiment; and
FIG. 13 is a flowchart for explaining an operation example of a management server in actuating a vibrator set in a seat of a participant.

### DETAILED DESCRIPTION

In general, according to one embodiment, a lecture system includes a first display section, a second display section, a first image pickup section, a server, and a first projecting section. The first display section is set on one side surface of a wall that divides one room into two rooms and is set to be seen by participants present in a first room, which is one divided room, and displays a material of a lecture. The second display section is set on a side surface on the opposite side of the surface of the wall on which the first display section is set and is set to be seen by participants present in a second room, which is the other divided room, and displays a material including content same as content of the material displayed by the first display section. The first image pickup section is disposed in the first room and picks up an image of a lecturer . The server receives the image picked up by the first image pickup section and creates an image formed by segmenting the image of the lecturer. The first projecting section projects the image created by the server toward the wall of the second room.

In the lecture system in the embodiment, a wall is provided in the center of a seminar room to divide the seminar room into two. An output device such as a large display is set on the wall. It is possible to reduce the breadth of the seminar room to a half by setting the wall.

If the seminar room is divided into two, since there is usually only one lecturer, the lecturer can stay in only one room. However, in the embodiment, the figure of the lecturer is displayed in the other room. Consequently, it is possible to maintain feeling of a live lecture in both the rooms.

The lecturer can see states of participants only in one room where the lecturer is present. However, in the lecture system in the embodiment, an image of the other room is displayed on the output device. Consequently, the lecturer can see states of both the rooms.

If the participants in the room where the lecturer is currently present enthusiastically listen to the lecture but the participants in the other room are not so enthusiastic, the lecturer moves to the other room and continues the lecture. The lecture system determines the room where the lecturer is present and switches the image. Consequently, the lecturer can deliver the lecture in a desired room without stress.

Embodiments are explained below with reference to the drawings.

### First Embodiment

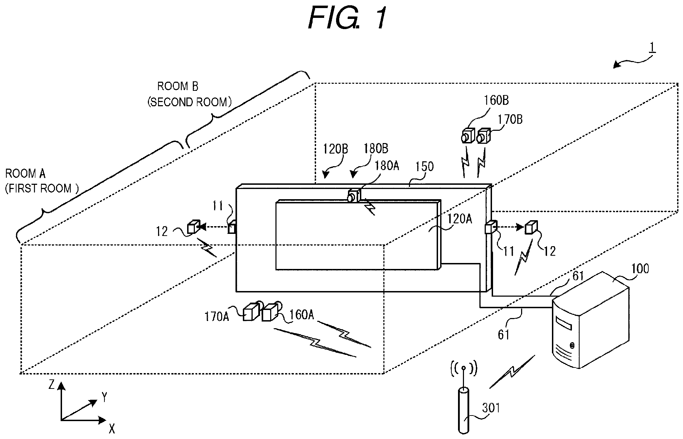

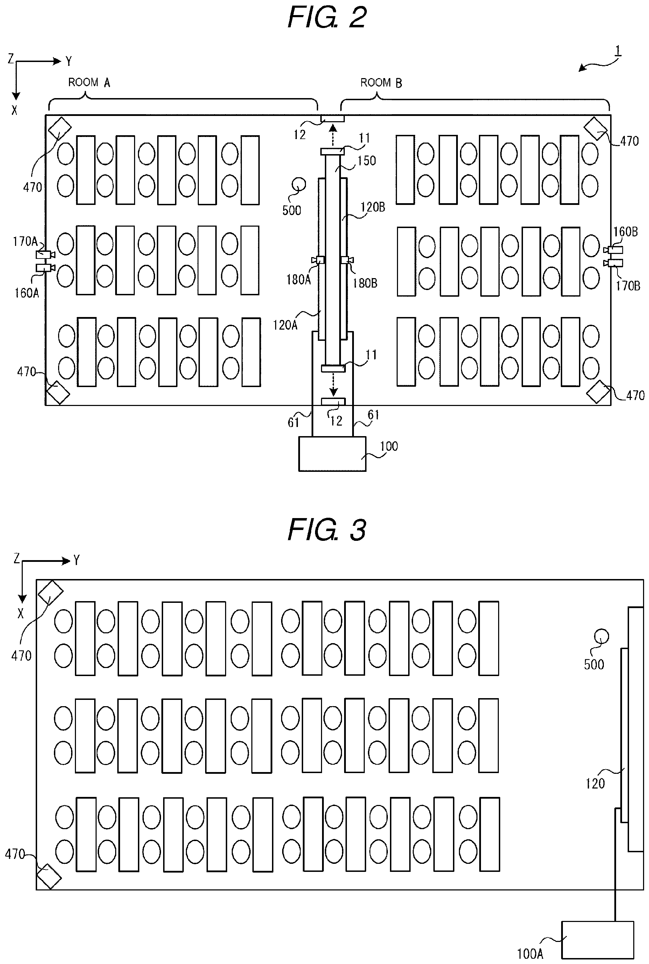

FIG. 1 is a schematic diagram (a perspective view) of a seminar room in a first embodiment. FIG. 2 is a schematic diagram of the seminar room viewed from above. Note that an X axis, a Y axis, and a Z axis shown in figures referred to below are common in the figures.

In the seminar room in the embodiment, a wall 150 is provided in the center to divide a classroom into two. For convenience of explanation, the two divided rooms are referred to as room A (first room) and room B (second room).

To enable a lecturer to move between the two divided rooms, the wall 150 is set in a position away from inner walls of the seminar room enough for a person to pass between the wall 150 and the inner walls. In passageways formed by the inner walls of the seminar room and the wall 150, infrared-ray emitting sections 11 and infrared-ray receiving sections 12 (sensors) are disposed. The infrared-ray emitting sections 11 and the infrared-ray receiving sections 12 detect passage of the person and transmit, to a management server 100, information indicating that the passage is detected. The detection information is transmitted by radio communication through an access point 301.

A lecture system 1 includes a camera 160A (a first image pickup section) and a camera 160B (a second image pickup section). The camera 160A picks up an image of the wall 150 facing the room A. The camera 160B picks up an image of the wall 150 facing the room B. The cameras 160A and 160B sequentially transmit the picked-up images to the management server 100. The cameras 160A and 160B are immovable cameras including wide-angle lenses. However, the cameras 160A and 160B may be cameras that rotate around axes in the Z-axis direction.

Note that the camera in the room where a lecturer 500 (see FIG. 2) is present functions and the other camera stops. If the lecturer 500 is delivering a lecture in, for example, the room A, the camera 160A starts and performs image pickup but the camera 160B stops image pickup. The management server 100 performs switching of the image pickup from the camera 160A to the camera 160B. The image pickup is switched if the infrared-ray emitting section 11 and the infrared-ray receiving section 12 detect passage of the lecturer 500.

For example, if the lecturer 500 is delivering a lecture in the room A, an image picked up by the camera 160A includes the lecturer 500. The management server 100 acquires a moving image picked up by any one of the cameras 160A and 160B and creates a moving image formed by segmenting only a human image (only the lecturer 500) from the moving image. The management server 100 transmits the segmented moving image to any operating one of a projector 170A (a second projecting section) and a projector 170B (a first projecting section). The projectors 170A and 170B are units that project, on the wall 150, the moving image transmitted from the management server 100. One of the projectors 170A and 170B in the room where the lecturer 500 is absent starts and projects an image. One of the projectors 170A and 170B in the room where the lecturer 500 is present stops projection of an image. Like the switching of the cameras 160A and 160B, the projectors 170A and 170B are switched if the infrared-ray emitting section 11 and the infrared-ray receiving section 12 detect passage of the lecturer 500.

As explained above, in the room where the lecturer 500 is present, the camera starts and the projector stops. On the other hand, in the room where the lecturer 500 is absent, the camera stops and the projector starts. If the infrared-ray emitting section 11 and the infrared-ray receiving section 12 detect passage of a person, that is, if the lecturer 500 moves to the other room, the start and the stop of the cameras and the projectors are switched.
A camera 180A (a third image pickup section) and a camera 180B (a fourth image pickup section) are immovable wide-angle fixed cameras that pick up images of the entire participant side. The cameras 180A and 180B transmit image pickup data to the management server 100 through radio communication. The management server 100 performs control to project a moving image picked up by the camera 180A on a part of a region of a display 120B (a second display section) facing the room B. The management server 100 performs control to project a moving image picked up by the camera 180B on a part of a region of a display 120A (a first display section) facing the room A.

The displays 120A and 120B are set across the wall 150. The display 120A is set on a side surface on the room A side of the wall 150. The display 120A is set such that participants present in the room A view the display 120A. The display 120B is set on side surface of the wall 150 on the opposite side of the surface on which the display 120A is set. The display 120B is set such that the participants present in the room B view the display 120B. That is, the display 120A is set to direct a display surface thereof to the room A. The display 120B is set to direct a display surface thereof to the room B. The displays 120A and 120B display a lecture material including the same content to the participants present in the rooms . The lecture material is stored in the management server 100. The management server 100 projects images of the lecture material on the displays 120A and 120B via cables 61. Two cables 61 are prepared. One of the cables 61 connects the management server 100 and the display 120A. The other connects the management server 100 and the display 120B. The cables 61 are cables conforming to the HDMI (High-Definition Multimedia Interface) standard.

Note that the displays 120A and 120B may be touch panel displays, on display surfaces of which touch panels are stacked and disposed. In this case, the cables 61 are configured as cables of the HDMI standard for outputting a video and cables of the USB standard for transmitting a touch position to the management server 100. Projectors may be adopted instead of the displays 120A and 120B. In this case, the projectors are projectors for displaying a lecture material and are used differently from the projectors 170A and 170B.

The access point 301 builds a communication infrastructure for performing data communication conforming to the radio communication standard of the IEEE 802.11 series. The access point 301 forms a local area network and relays data communication among the devices shown in FIGS. 1 and 2. The access point 301 has a function of automatically allocating IP addresses to the devices. The access point 301 performs control on the basis of the IP address to uniquely identify the devices, specify a transmission source, and transmit data to a transmission destination.

Speakers 470 shown in FIG. 2 output voice collected by a lecturer microphone explained below. The speakers 470 are units including power amplifiers and controllers. In FIGS. 1 and 2, the management server 100 and the access point 301 are set on the outer side of the seminar room. However, the management server 100 and the access point 301 may be set on the inner side of the seminar room.

FIG. 3 is a schematic diagram showing a seminar room in the past viewed from above. As shown in FIG. 3, if the seminar room is one room, since the back of the seminar room is far from the lecturer 500 and a display 120, it is difficult to view and listen to lecture content. Therefore, as shown in FIG. 2, the seminar room is divided into two to reduce the distance from the lecturer 500 and enable the participants to understand the lecture content better.

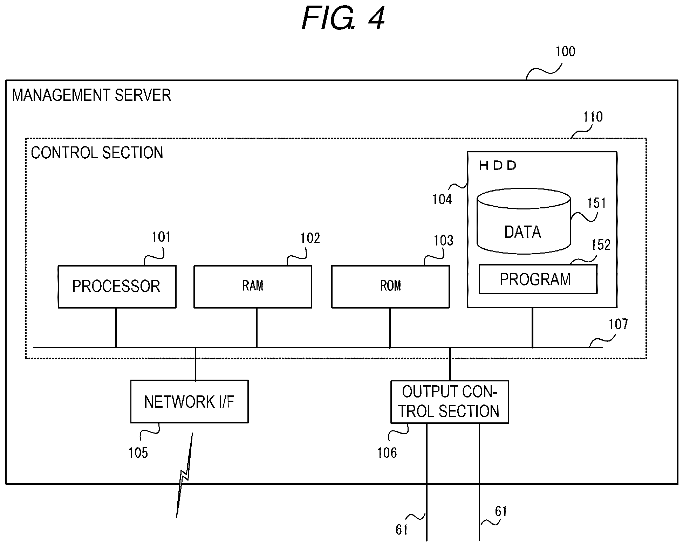

FIG. 4 is a block diagram showing a configuration example of the management server 100. The management server 100 is a computer and includes a processor 101, a RAM (Random Access Memory) 102, a ROM (Read Only Memory) 103, a HDD (Hard Disk Drive) 104, a network I/F (Interface) 105, and an output control section 106. The units perform input and output of data and signals each other via a bus 107. Note that a component including the processor 101, the RAM 102, the ROM 103, the HDD 104, and the bus 107 for the units to perform input and output is a control section 110.

The processor 101 is an arithmetic unit such as a CPU (Central Processing Unit). The processor 101 expands, in the RAM 102, a computer program stored in the ROM 103 and a computer program 152 stored in the HDD 104 and executes arithmetic operation to provide various functions while cooperating with respective kinds of hardware. The RAM 102 is a main storage device. The ROM 103 is a device that has stored therein a system program and the like in a nonvolatile manner.

The HDD 104 is an auxiliary storage device that stores, in a nonvolatile manner, the computer program 152, data 151 for controlling the operation of the computer program 152, and the like. The network I/F 105 includes a mechanism conforming to the radio communication standard of the IEEE 802.11 series and controls data communication between the management server 100 and an external apparatus.

The output control section 106 is connected to the two cables 61 and directly controls display of the displays 120A and 120B.

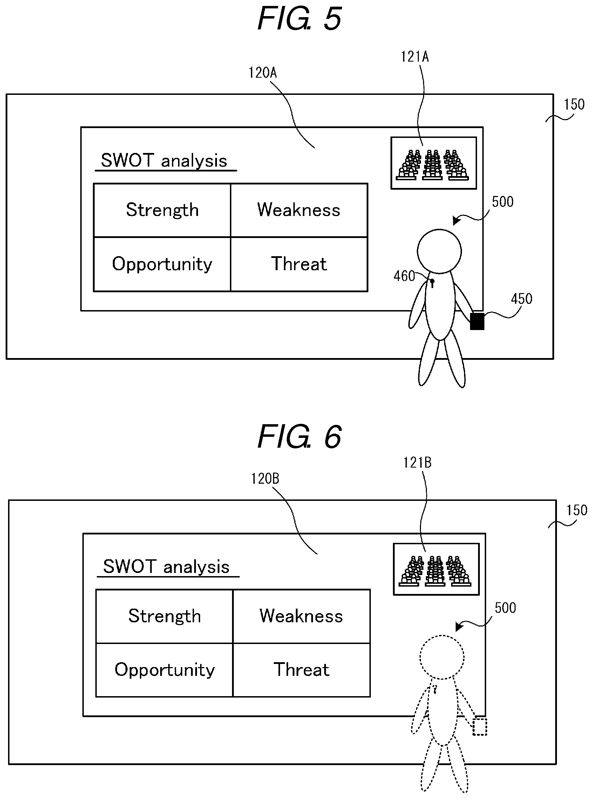

FIG. 5 shows an example of a state viewed from participants on a side where the lecturer 500 is present. In this example, it is assumed that the lecturer 500 is present in the room A. The display 120A displays material data prepared by the lecturer 500 and stored in the management server 100 beforehand and displays, in a region 121A, current photographed content by the camera 180B, that is, a state of participants in the room B where the lecturer 500 is absent. The lecturer 500 carries a portable terminal 450 connected to the management server 100 via the access point 301. The lecturer 500 operates the portable terminal 450 on the basis of a known technique to switch the display of the display 120A to, for example, the previous page or the next page. If the display 120A is mounted with a touch panel as well, the lecturer 500 can switch the display to the previous page or the next page by touching a screen and performing slide operation.

The lecturer 500 wears a microphone 460 on clothes. The microphone 460 collects voice uttered by the lecturer 500. The collected voice is output from the speakers 470.

FIG. 6 shows an example of a state viewed from participants in the other room where the lecturer 500 is absent, that is, in this example, the room B. The display 120B displays a lecture material including content same as content of the lecture material displayed by the display 120A. A page of the material is switched in the same manner in association with the display 120A. The voice collected by the microphone 460 is also output by the speakers 470 on the room B side. In a region 121B shown in FIG. 6, current photographed content by the camera 180A, that is, a state of the participants in the room A where the lecturer 500 is present is displayed.

In the room B, instead of the lecturer 500, a video of the lecturer 500 picked up by the camera 160A set in the room A is projected on the wall 150 on a real-time basis (in FIG. 6, the video is indicated by a broken line). The management server 100 segments an image picked up by the camera 160A into only an image of the lecturer 500. The projector 170B receives an input of the segmented image data (a moving image) and projects the moving image on the wall 150. With this configuration, the image of the lecturer 500 can also be projected on a real-time basis in the room B where the lecturer 500 is absent. Therefore, all the participants in the room A and the room B can take a lecture in the same quality.

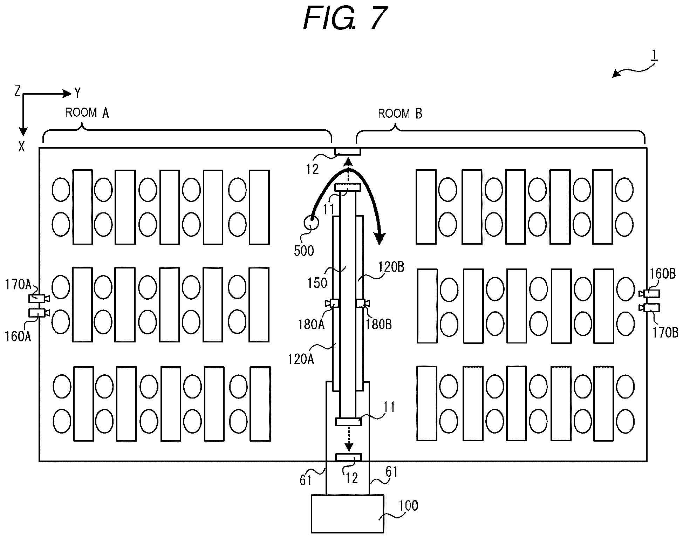

The lecturer 500 can check a participation state in the other room (the room B) by looking at the region 121A of the display 120A. If the participants in the room B are not so enthusiastic, the lecturer 500 moves to the room B through the passageway formed by the wall 150 and the inner wall of the seminar room. A state in this case is shown in FIG. 7. As indicated by an arrow line in FIG. 7, the lecturer 500 passes between the infrared-ray emitting section 11 and the infrared-ray receiving section 12 when the lecturer 500 moves between the rooms. Consequently, the lecturer 500 blocks an infrared ray radiated from the infrared-ray emitting section 11. The infrared-ray receiving section 12 detects the passage of the lecturer 500 by being triggered by the blocking of the infrared ray and transmits information indicating that the detection of the passage to the management server 100 through the access point 301.

When receiving the information from the infrared-ray receiving section 12, the management server 100 transmits instruction information for an image-pickup stop to the camera 160A, which is currently performing image pickup, and transmits instruction information for an image-pickup start to the camera 160B. The management server 100 transmits instruction information for a projection start to the projector 170A and transmits instruction information for a projection stop to the projector 170B. The management server 100 acquires an image picked up by the camera 160B, creates a segmented image of the lecturer 500, and outputs the created image to the projector 170A. Consequently, an image of the lecturer 500 moved to the room B is projected in the room A. The same applies when the lecturer 500 present in the room B moves to the room A. When the lecturer 500 passes between the infrared-ray emitting section 11 and the infrared-ray receiving section 12, the infrared-ray receiving section 12 transmits detection information to the management server 100. When receiving the detection information, the management server 100 switches image-pickup states in the cameras 160A and 160B and switches projection states in the projectors 170A and 170B.

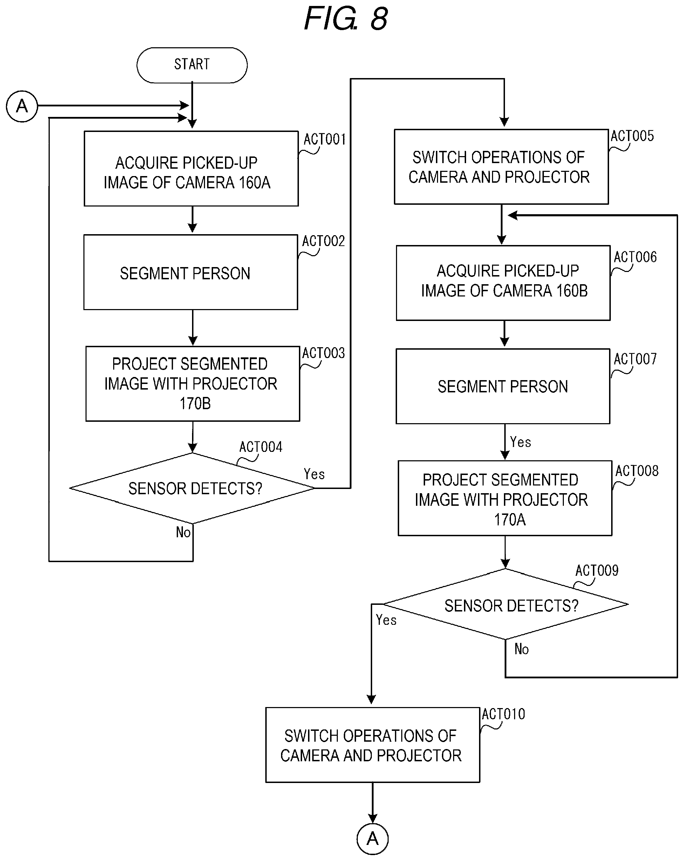

An operation example of the management server 100 is explained with reference to a flowchart of FIG. 8. This operation is realized by the processor 101 of the management server 100 in cooperation with the hardware in the management server 100 by expanding, in the RAM 102, the computer program 152 stored in the HDD 104 beforehand and executing arithmetic operation using the data 151 according to necessity. In an example shown in FIG. 8, it is assumed that the lecturer 500 is delivering a lecture in the room A first.

The processor 101 controls the network I/F 105, acquires a picked-up image (a moving image) from the camera 160A, and causes the RAM 102 to store the picked-up image once (ACT 001) .

The processor 101 creates moving image data obtained by extracting a person (the lecturer 500) from obtained moving image data (ACT 002). The processor 101 divides the original moving image data into frames to create a plurality of still images and applies existing techniques, for example, image processing techniques such as an edge detection technique to the still images in combination to extract the person. The processor 101 combines extracted frame images to recreate moving image data of only the person.

The processor 101 controls the network I/F 105 and transmits the moving image data of only the person to the projector 170B. The projector 170B projects the moving image on the wall 150 (ACT 003).

The processor 101 determines whether information indicating that the lecturer 500 is detected is received from the sensor of the infrared-ray receiving section 12 (ACT 004) . If the sensor detection information is not received (No in ACT 004), the processor 101 returns the processing to ACT 001. If the sensor detection information is received (Yes in ACT 004), the processor 101 switches the image pickup/stop operations of the cameras 160A and 160B and the projection/stop operations of the projectors 170A and 170B (ACT 005). The processor 101 transmits stop instruction information to the camera 160A to stop image pickup of the camera 160A. On the other hand, the processor 101 transmits image pickup instruction information to the camera 160B to start image pickup of the camera 160B. The processor 101 transmits projection instruction information to the projector 170A to start projection of the projector 170A. On the other hand, the processor 101 transmits stop instruction information to the projector 170B to stop projection of the projector 170B.

The processor 101 controls the network I/F 105 and acquires a picked-up image (a moving image) from the camera 160B (ACT 006), creates moving image data obtained by extracting a person (the lecturer 500) (Act 007), and transmits moving image data of only the person to the projector 170A (ACT 008). This operation is repeatedly executed until sensor detection information is received (a loop of No in ACT 009) . ACT 006 to ACT 008 are the same as ACT 001 to ACT 003 except that input and output destinations are changed.

If the sensor detection information is received (Yes in ACT 009), the processor 101 switches the image pickup/stop operations of the cameras 160A and 160B and the projection/stop operations of the projectors 170A and 170B (ACT 010). The processor 101 transmits stop instruction information to the camera 160B and stops the image pickup of the camera 160B. On the other hand, the processor 101 transmits image pickup instruction information to the camera 160A and starts the image pickup in the camera 160A. The processor 101 transmits projection instruction information to the projector 170B and starts the projection of the projector 170B. On the other hand, the processor 101 transmits stop instruction information to the projector 170A and stops the projection of the projector 170A. After the switching operation, the processor 101 returns the processing to ACT 001.

### Second Embodiment

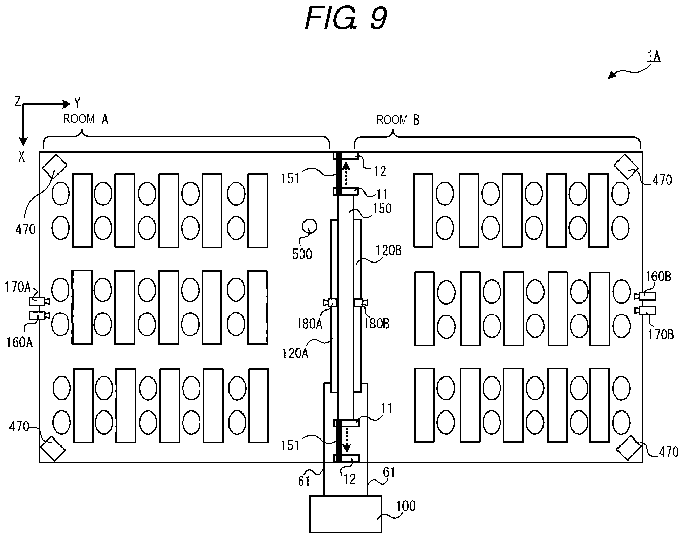

As an application of the mode explained in the first embodiment, a method of use for, for example, delivering a lecture of one same lecture content in different languages is also conceivable. In a second embodiment, this mode is explained. FIG. 9 shows a configuration example of a seminar room in the second embodiment. A configuration example of the seminar room viewed from the above is shown.

In a lecture system 1A in the second embodiment, in addition to the configuration in the first embodiment, doors 151 are provided in passageways between the infrared-ray emitting sections 11 and the infrared-ray receiving sections 12. If the doors 151 are closed, sound leakage between the rooms A and B can be prevented. Therefore, for example, participants can take a lecture in English voice in one room and take a lecture in Japanese voice in the other room. Otherwise, the second embodiment is the same as the first embodiment.

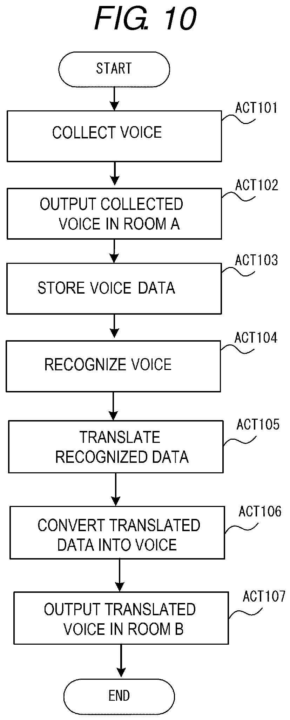

FIG. 10 is a flowchart for explaining an example of a sound translation operation in the second embodiment. The microphone 460 collects voice uttered by the lecturer 500 (ACT 101). The speakers 470 in one room (in this example, the room A) directly output the voice (ACT 002).

The processor 101 of the management server 100 receives sound data collected by the microphone 460 via the network I/F 105 and the access point 301 and once stores the sound data in the RAM 102 (ACT 103) . The processor 101 subjects the sound data stored in the RAM 102 to sound recognition and converts the sound data into text data (ACT 104) and translates the recognized data (the text data) into another language such as Japanese (ACT 105). The processor 101 converts the translated text data into sound data (ACT 106). ACT 104 to ACT 106 are performed using an existing technique.

The processor 101 operates the network I/F 105 and outputs the translated sound data to the speakers 470 in the room B (ACT 107). With the operation shown in FIG. 10, it is possible to output English voice from the speakers 470 in one room and output the other language from the speakers 470 in the other room.

Note that an implementation may be adopted in which switches are provided in both the doors 151 and, if both the doors 151 are closed, the processor 101 executes the operation shown in FIG. 10. Further, an implementation may be adopted in which a translator translates voice uttered by the lecturer 500 and the voice is output from the speakers 470 in the other room.

Note that an implementation may be adopted in which, if sentences and terms are included in a lecture material for display, a translated lecture material is displayed in each of the rooms. For example, if Japanese is included a lecture material, the processor 101 causes a display to display the lecture material in Japanese in one room and causes a display to display the lecture material translated into English in the other room. In this case, an implementation may be adopted in which materials in the languages are prepared beforehand. Further, an implementation may be adopted in which the processor 101 executes translation software to perform translation processing and incorporates translated sentences in the lecture material every time the translation processing is performed. Note that, in the materials used in the rooms, the languages are different but contents of the materials are not different. That is, the materials including the same content are displayed in both the rooms.

### Third Embodiment

In a third embodiment, a lecturer performs attendance check of participants on the basis of images picked up by the cameras 180A and 180B. In the third embodiment, an implementation example is explained in which a dozing participant is woken up.

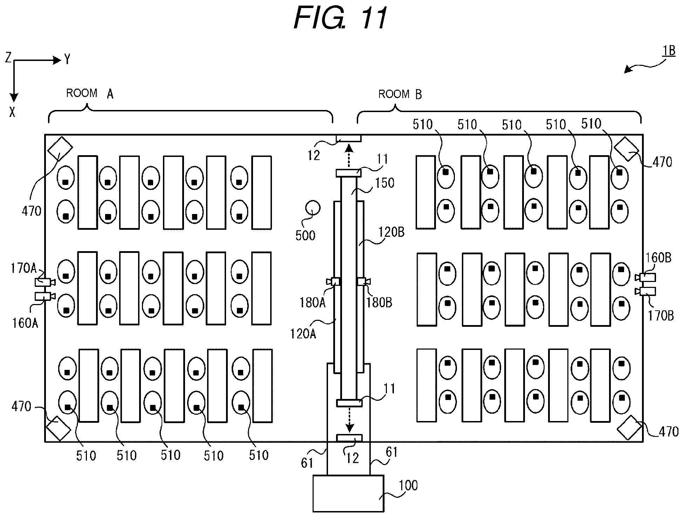

FIG. 11 shows a configuration example of a seminar room in the third embodiment and shows a configuration example of the seminar room viewed from above. In a lecture system 1B, in addition to the mode in the first embodiment, a vibrator 510 is disposed in each of seats on which the participants are seated. The vibrator 510 is disposed in a position where the participant seated on the seat can check vibration such as a seating surface, a backrest, or an armrest. When receiving instruction information from the management server 100 via the access point 301, the vibrator 510 vibrates in order to wake up a dozing participant.

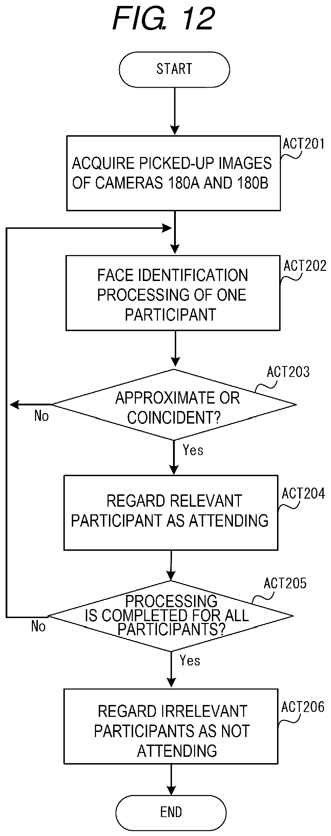

FIG. 12 is a flowchart for explaining an operation example of attendance check processing of the management server 100. In the flowchart of FIG. 12, if lateness is not allowed, the attendance check processing is started immediately after a lecture start. If slight lateness is allowed, the attendance check processing is performed after a specified time elapses. The attendance check processing may be periodically performed during a lecture.

The processor 101 acquires picked-up images from the cameras 180A and 180B and once stores the picked-up images in the RAM 102 (ACT 201). First, the processor 101 performs, in the images stored in the RAM 102, face identification processing for a participant seated in the leftmost in the front row. In this example, feature data (data 151) of faces of all the participants is stored in the HDD 104 beforehand in association with participant identification information that uniquely defines the participants. The processor 101 performs the face identification processing by comparing feature data of a face obtained from the picked-up images and the data 151 stored in the HDD 104. As a specific method of the face identification processing, the face identification processing is performed on the basis of the related art. As a result of the comparison, if feature data, an approximation value of which indicating that the two data are coincident or to which degree the two data are approximate is within a range of a specified value, is absent in the HDD 104 (No in ACT 203), the processor 101 returns the processing to ACT 202 and applies the face identification processing to the next participant. If coincident or approximate feature data is present in the HDD 104 (Yes in Act 203), the processor 101 recognizes the relevant participant as attending (ACT 204). In ACT 204, the processor 101 acquires participant identification information associated with the coincident or approximate feature data stored in the HDD 104 and causes the HDD 104 to store the participant identification information as another data in association with a date of the day (i.e., a participation date).

The processor 101 determines whether the processing for all the participants, whose images are picked up by the cameras 180A and 180B, is completed (ACT 205). If the processing for all the participants is not completed (No in ACT 205), the processor 101 returns to ACT 202 and applies the processing in ACT 202 to ACT 204 to the next participant. The processor 101 sequentially advances the processing toward the right direction of the picked-up image of the camera 180A. For example, in the case of a second participant, the processing is applied to a participant seated second from the left in the front row. After applying the face identification processing to all participants in the front row, the processor 101 advances the processing to the next row. If the processing is completed for the picked-up image of the camera 180A, the processing of the picked-up image obtained by the camera 180B is performed. Note that the advancing direction and the like of the processing are only examples.

If the processing for all the participants, whose images are picked up by the cameras 180A and 180B, is completed (Yes in ACT 205), the processor 101 regards the participants, whose feature data of the face is not coincident or approximate with the data 151 in ACT 204, as not attending (ACT 206). In ACT 206, the processor 101 acquires the participant identification information not acquired in ACT 204 and causes the HDD 104 to store the participant identification information as another data in association with the date of the day (i.e., the participation date).

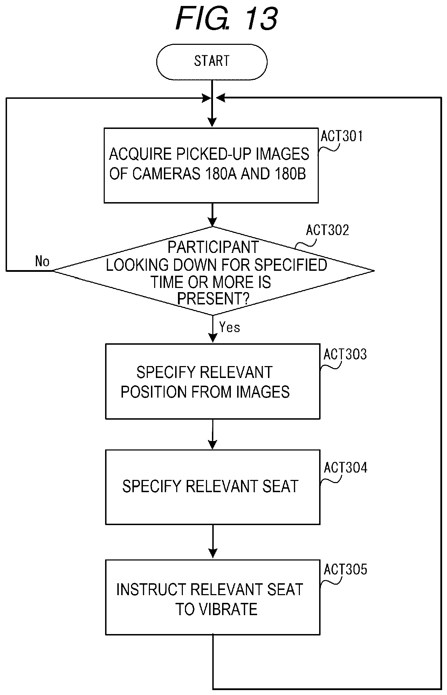

FIG. 13 is a flowchart for explaining an operation example of the management server 100 in specifying a dozing participant and vibrating the vibrator 510. The processor 101 controls the network I/F 105, acquires images picked up by the cameras 180A and 180B, and causes the RAM 102 to store the images (ACT 301). The processor 101 determines, on the basis of the acquired image, whether a participant looking down for a specified time or more (e.g., five minutes or more) is present (ACT 302). If a face of a participant cannot be specified for five minutes or more in the position of the face on the image on which the attendance of the participant can be confirmed, the processor 101 determines that the participant is looking down. If the participant looking down is absent (No in ACT 302), the processor 101 returns to ACT 301. On the other hand, if the participant looking down for the specified time is present (Yes in ACT 302), the processor 101 specifies a coordinate value in the image of the face position (ACT 303) .

Subsequently, the processor 101 specifies, on the basis of the specified coordinate, a seat of the looking-down participant (ACT 304). Coordinate positions and seat numbers (e.g., IP addresses of the vibrators 510) corresponding to the coordinate positions are registered in the HDD 104 as the data 151 beforehand. The processor 101 extracts the seat number from the coordinate on the basis of this correspondence relation in ACT 304.

The processor 101 transmits information for instructing a vibration start to the specified IP address (ACT 305) . Consequently, the designated vibrator 510 vibrates.

In the explanation in the embodiments, the functions for carrying out the modes are recorded in an apparatus in advance. The embodiments are not limited to this, and the same functions may be downloaded from a network to the apparatus, or a recording medium having the same functions stored therein may be installed in the apparatus. A form of the recording medium may be any form as long as the recording medium is a recording medium capable of storing a computer program and readable by the apparatus such as a CD-ROM. The functions obtained by the installation or the download in advance in this way may be realized in cooperation with an OS (operating system) or the like in the apparatus.

With the modes of the embodiments, even participants in the back of a seminar room can check a lecturer and a lecture material prepared by the lecturer near the lecture and the lecture material. The lecturer can overlook the entire room.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made provided that it is not departed by the scope of the claims. The accompanying claims and their equivalents are intended to cover such forms or modifications as would fall within the scope of the inventions.

## Claims

1. A lecture system (1) comprising:
a first display section (120A) set on one side surface of a wall (150) that divides one room into two rooms (A,B), set to be seen by participants present in a first room (A), which is one of the two rooms in which the one room is divided, and configured to display a material of a lecture;
a second display section (120B) set on a side surface on the opposite side of the surface of the wall (150) on which the first display section (120A) is set, set to be seen by participants present in a second room (B), which is the other room of the two rooms in which the one room is divided, and configured to display a material including content same as content of the material displayed by the first display section (120A);
a first image pickup section (160A) disposed in the first room (A) and configured to pick up an image of a lecturer (500) ;
a server (100) configured to receive the image picked up by the first image pickup section (160A) and create an image formed by segmenting the image of the lecturer (500); and
a first projecting section (170B) configured to project the image created by the server (100) toward the wall (150) of the second room (B) and further comprising:
a sensor (11, 12) set in a passageway between the first room (A) and the second room (B) and configured to detect passage of the lecturer (500);
a second image pickup section (160B) disposed in the second room (B) and configured to pick up an image of the lecturer (500); and
a second projecting section (170A) configured to project, toward the wall (150) of the first room (A), an image created by the server (100) on the basis of the image picked up by the second image pickup section (160B), wherein
when the sensor (11,12) detects the passage of the lecturer (500), the server (100) starts the second image pickup section (160B), stops the first image pickup section (160A), receives the image picked up by the second image pickup section (160B), creates an image formed by segmenting the image of the lecturer (500), transmits the created image to the second projecting section (170A) and stops said first projecting section (170B).

2. The system (1) according to claim 1, further comprising:
a third image pickup section (180A) configured to pick up an image of participants present in the first room (A); and
a fourth image pickup section (180B) configured to pick up an image of participants present in the second room (B).

3. The system (1) according to claim 2, wherein :
the first display section (120A) displays, in a part of a display region (121A), the image picked up by the fourth image pickup section (180B), and
the second display section (120B) displays, in a part of a display region (121B), the image picked up by the third image pickup section (180A).

4. The system (1) according to any one of claims 1 to 3, further comprising:
a microphone (460) configured to collect voice of the lecturer (500);
a first speaker (470) set in the first room (A) and configured to output the voice of the lecturer (500) collected by the microphone (460); and
a second speaker (470) set in the second room (B) and configured to output voice obtained by translating the voice of the lecturer (500) collected by the microphone (460) into another language.

5. The system (1) according to claim 4, wherein the server (100) receives data of the voice of the lecturer (500) collected by the microphone (460), translates the data into the other language, and outputs the translated voice data to the second speaker (470).

6. The system (1) according to any one of claims 2 to 5, wherein the server (100) receives the images picked up by the third image pickup section (180A) and the fourth image pickup section (180B) and determines attendance of the respective participants on the basis of images of faces of the participant participating in the lecture.

7. The system (1) according to any one of claims 2 to 6, further comprising a plurality of vibrators (510) configured to give vibration to the respective participants and vibrate when receiving information from the server (100), wherein
the server (100) specifies, on the basis of the images picked up by the third image pickup section (180A) and the fourth image pickup section (180B), a participant looking down for a fixed period and transmits the information to the vibrator (510) of the specified participant.

8. An information processing apparatus (100) comprising:
an interface section (105) configured to receive an image from a first image pickup section (160A) that picks up an image of a lecturer (500) present in a first room (A); and
a control section (110) configured to control a first display section (120A) set in the first room (A) to display a material of a lecture, control a second display section (120B) set in a second room (B) to display a material including content same as content of the material, create an image obtained by segmenting the image of the lecturer (500) from the image received by the interface section (105), and control the interface section (105) to transmit the created image to a first projecting section (170B) that is configured to project an image toward a wall (150) of the second room (B) on which the second display section (120B) is set, wherein said interface section (105) is further configured to receive information indicating detection of passage of the lecturer (500) from a sensor (11,12), that is set in a passageway between the first room (A) and the second room (B) and detects passage of the lecturer (500), and to receive an image from said second image pickup section (160B), that is disposed in the second room (B) and picks up an image of the lecturer (500), and wherein said control section (110) is further configured to start said second image pickup section (160B) and to stop said first image pickup section (160A), when said interface section (105) receives said information from said sensor (11, 12), to create when the interface section (105) receives said information from the sensor (11,12), an image formed by segmenting the image of the lecturer (500) from the image picked up by the second image pickup section (160B) and to control the interface section (105) to transmit the created image to a second projecting section (170A) that is configured to project the image toward a wall (150) of the first room (A) on which the first display section (120A) is set and to stop said first projecting section (170B).

9. The apparatus (100) according to claim 8, wherein the interface section (105) is configured to receive an image from a third image pickup section (180A) that picks up an image of participants present in the first room (A) ; and is configured to receive an image from a fourth image pickup section (180B) that picks up an image of participants present in the second room (B),
the control section (110) further controls the interface section (105) to transmit the image picked up by the fourth image pickup section (180B) to the first display section (120A) displays, in a part of a display region (121A), and to transmit the image picked up by the third image pickup section (180A) to the second display section (120B), in a part of a display region (121B) .

10. The apparatus (100) according to any one of claims 8 to 9, wherein the interface section (105) is configured to receive sound data collected by a microphone (460) configured to collect voice of the lecturer (500),
the control section (110) further obtains a translation of the voice of the lecturer (500) collected by the microphone (460) into another language, and controls the interface section (105) to output the voice of the lecturer (500) collected by the microphone (460) to a first speaker (470) set in the first room (A), and to output the voice obtained by the translation to a second speaker (470) set in the second room (B).

11. The apparatus (100) according to any one of claims 8 to 10, wherein the interface section (105) is configured to receive an image of the participants present in the first room (A) picked up by a third image pickup section (180A), to receive an image of the participants present in the second room (B) picked up by a fourth image pickup section (180B),
the control section (110) further determines attendance of the respective participants on the basis of the images received of the faces of the participant participating in the lecture.

12. The apparatus (100) according to any one of claims 8 to 11, wherein the interface section (105) is configured to receive an image of the participants present in the first room (A) picked up by a third image pickup section (180A), to receive an image of the participants present in the second room (B) picked up by a fourth image pickup section (180B), and to control a plurality of vibrators (510) configured to give vibration to the respective participants,
the control section (110) further specifies, on the basis of the images picked up by the third image pickup section (180A) and the fourth image pickup section (180B), a participant looking down for a fixed period and controls the interface section (105) to give a vibration to the specified participant.

13. A storage medium (104) having a computer program (152) stored therein, the computer program (152) causing a computer to execute processing for:
controlling a first display section (120A) set in a first room (A) to display a material of a lecture;
controlling a second display section (120B) set in a second room (B) to display a material including content same as content of the material;
receiving an image from a first image pickup section (160A) that picks up an image of a lecturer (500) present in the first room (A); receiving an image from a second image pickup section (160B) that picks up an image of said lecturer (500) when present in the second room (B); creating an image formed by segmenting the image of the lecturer (500) from the image received by said first image pickup section (160A); receiving information indicating detection of passage of the lecturer from a sensor (11,12) that is set in a passageway between the first room (A) and the second room (B) and detects passage of the lecturer; transmitting said created image to a first projecting section (170B) that projects an image toward a wall (150) of the second room (B) on which the second display section (120B) is set when said lecturer (500) is in said first room (A) and receiving an image from said second image pickup section (160B) and creating an image formed by segmenting the image of the lecturer (500) received from said second image pickup section (160B), transmitting the created image to a second projecting section (170A) to display a material including content same as content of the material of the lecture and stopping said first image pickup section (160A) and said first projecting section (170B) when said information indicating detection of passage of the lecturer (500) from said sensor (11, 12) have been received.

## Patentansprüche

1. Vortragssystem (1), das umfasst:
einen ersten Anzeigeabschnitt (120A), der an einer Seitenoberfläche einer Wand (150) eingerichtet ist, die einen Raum in zwei Räume (A, B) unterteilt, so eingerichtet ist, dass er von Teilnehmern gesehen wird, die im ersten Raum (A) anwesend sind, der einer der zwei Räume ist, in die der eine Raum unterteilt ist, und dazu ausgelegt ist, ein Material eines Vortrags anzuzeigen,
einen zweiten Anzeigeabschnitt (120B), der an einer Seitenoberfläche auf der entgegengesetzten Seite der Oberfläche der Wand (150) eingerichtet ist, an der der erste Anzeigeabschnitt (120A) eingerichtet ist, so eingerichtet ist, dass er von Teilnehmern gesehen wird, die in einem zweiten Raum (B) anwesend sind, der der andere Raum der zwei Räume ist, in die der eine Raum unterteilt ist, und dazu ausgelegt ist, ein Material mit einem Inhalt anzuzeigen, der derselbe wie der Inhalt des Materials ist, das durch den ersten Anzeigeabschnitt (120A) angezeigt wird;
einen ersten Bildaufnahmeabschnitt (160A), der im ersten Raum (A) angeordnet ist und dazu ausgelegt ist, ein Bild eines Vortragenden (500) aufzunehmen;
einen Server (100), der dazu ausgelegt ist, das durch den ersten Bildaufnahmeabschnitt (160A) aufgenommene Bild zu empfangen und ein Bild zu erzeugen, das durch Segmentieren des Bildes des Vortragenden (500) gebildet wird; und
einen ersten Projektionsabschnitt (170B), der dazu ausgelegt ist, das durch den Server (100) erzeugte Bild in Richtung der Wand (150) des zweiten Raums (B) zu projizieren, und das ferner umfasst:
einen Sensor (11, 12), der in einem Durchgang zwischen dem ersten Raum (A) und dem zweiten Raum (B) eingerichtet ist und dazu ausgelegt ist, den Durchtritt des Vortragenden (500) zu detektieren;
einen zweiten Bildaufnahmeabschnitt (160B), der im zweiten Raum (B) angeordnet ist und dazu ausgelegt ist, ein Bild des Vortragenden (500) aufzunehmen; und
einen zweiten Projektionsabschnitt (170A), der dazu ausgelegt ist, in Richtung der Wand (150) des ersten Raums (A) ein Bild zu projizieren, das durch den Server (100) auf der Basis des durch den zweiten Bildaufnahmeabschnitt (160B) aufgenommenen Bildes erzeugt wird, wobei
wenn der Sensor (11, 12) den Durchtritt des Vortragenden (500) detektiert, der Server (100) den zweiten Bildaufnahmeabschnitt (160B) startet, den ersten Bildaufnahmeabschnitt (160A) stoppt, das durch den zweiten Bildaufnahmeabschnitt (160B) aufgenommene Bild empfängt, ein Bild erzeugt, das durch Segmentieren des Bildes des Vortragenden (500) gebildet wird, das erzeugte Bild zum zweiten Projektionsabschnitt (170A) überträgt und den ersten Projektionsabschnitt (170B) stoppt.

2. System (1) nach Anspruch 1, das ferner umfasst:
einen dritten Bildaufnahmeabschnitt (180A), der dazu ausgelegt ist, ein Bild von Teilnehmern aufzunehmen, die im ersten Raum (A) anwesend sind; und
einen vierten Bildaufnahmeabschnitt (180B), der dazu ausgelegt ist, ein Bild von Teilnehmern aufzunehmen, die im zweiten Raum (B) anwesend sind.

3. System (1) nach Anspruch 2, wobei:
der erste Anzeigeabschnitt (120A) in einem Teil eines Anzeigebereichs (121A) das durch den vierten Bildaufnahmeabschnitt (180B) aufgenommene Bild anzeigt, und
der zweite Anzeigeabschnitt (120B) in einem Teil eines Anzeigebereichs (121B) das durch den dritten Bildaufnahmeabschnitt (180A) aufgenommene Bild anzeigt.

4. System (1) nach einem der Ansprüche 1 bis 3, das ferner umfasst:
ein Mikrophon (460), das dazu ausgelegt ist, Sprache des Vortragenden (500) zu erfassen;
einen ersten Lautsprecher (470), der im ersten Raum (A) eingerichtet ist und dazu ausgelegt ist, die Sprache des Vortragenden (500), die durch das Mikrophon (460) erfasst wird, auszugeben; und
einen zweiten Lautsprecher (470), der im zweiten Raum (B) eingerichtet ist und dazu ausgelegt ist, Sprache auszugeben, die durch Übersetzen der Sprache des Vortragenden (500), die durch das Mikrophon (460) erfasst wird, in eine andere Sprache erhalten wird.

5. System (1) nach Anspruch 4, wobei der Server (100) Daten der Sprache des Vortragenden (500) empfängt, die durch das Mikrophon (460) erfasst wird, die Daten in die andere Sprache übersetzt und die übersetzten Sprachdaten an den zweiten Lautsprecher (470) ausgibt.

6. System (1) nach einem der Ansprüche 2 bis 5, wobei der Server (100) die durch den dritten Bildaufnahmeabschnitt (180A) und den vierten Bildaufnahmeabschnitt (180B) aufgenommenen Bilder empfängt und die Anwesenheit der jeweiligen Teilnehmer auf der Basis von Bildern von Gesichtern des Teilnehmers, der an dem Vortrag teilnimmt, bestimmt.

7. System (1) nach einem der Ansprüche 2 bis 6, das ferner eine Vielzahl von Vibratoren (510) umfasst, die dazu ausgelegt sind, den jeweiligen Teilnehmern eine Vibration zu erteilen und zu vibrieren, wenn sie vom Server (100) Informationen empfangen, wobei
der Server (100) auf der Basis der durch den dritten Bildaufnahmeabschnitt (180A) und den vierten Bildaufnahmeabschnitt (180B) aufgenommenen Bilder einen Teilnehmer, der für eine feste Zeitdauer nach unten blickt, festlegt und die Informationen zum Vibrator (510) des festgelegten Teilnehmers überträgt.

8. Informationsverarbeitungsvorrichtung (100), die umfasst:
einen Schnittstellenabschnitt (105), der dazu ausgelegt ist, ein Bild von einem ersten Bildaufnahmeabschnitt (160A) zu empfangen, der ein Bild eines Vortragenden (500) aufnimmt, der in einem ersten Raum (A) anwesend ist; und
einen Steuerabschnitt (110), der dazu ausgelegt ist, einen ersten Anzeigeabschnitt (120A) zu steuern, der im ersten Raum (A) eingerichtet ist, um ein Material eines Vortrags anzuzeigen, einen zweiten Anzeigeabschnitt (120B) zu steuern, der in einem zweiten Raum (B) eingerichtet ist, um ein Material mit Inhalt anzuzeigen, der derselbe wie der Inhalt des Materials ist, ein Bild zu erzeugen, das durch Segmentieren des Bildes des Vortragenden (500) aus dem Bild, das durch den Schnittstellenabschnitt (105) empfangen wird, erhalten wird, und den Schnittstellenabschnitt (105) zu steuern, um das erzeugte Bild zu einem ersten Projektionsabschnitt (170B) zu übertragen, der dazu ausgelegt ist, ein Bild in Richtung einer Wand (150) des zweiten Raums (B) zu projizieren, an der der zweite Anzeigeabschnitt (120B) eingerichtet ist, wobei
der Schnittstellenabschnitt (105) ferner dazu ausgelegt ist, Informationen, die die Detektion des Durchtritts des Vortragenden (500) angeben, von einem Sensor (11, 12) zu empfangen, der in einem Durchgang zwischen dem ersten Raum (A) und dem zweiten Raum (B) eingerichtet ist und den Durchtritt des Vortragenden (500) detektiert, und ein Bild vom zweiten Bildaufnahmeabschnitt (160B) zu empfangen, der im zweiten Raum (B) angeordnet ist und ein Bild des Vortragenden (500) aufnimmt, und
wobei der Steuerabschnitt (110) ferner dazu ausgelegt ist, den zweiten Bildaufnahmeabschnitt (160B) zu starten und den ersten Bildaufnahmeabschnitt (160A) zu stoppen, wenn der Schnittstellenabschnitt (105) die Informationen vom Sensor (11, 12) empfängt, um, wenn der Schnittstellenabschnitt (105) die Informationen vom Sensor (11, 12) empfängt, ein Bild zu erzeugen, das durch Segmentieren des Bildes des Vortragenden (500) aus dem Bild, das durch den zweiten Bildaufnahmeabschnitt (160B) aufgenommen wird, erhalten wird, und den Schnittstellenabschnitt (105) zu steuern, um das erzeugte Bild zu einem zweiten Projektionsabschnitt (170A) zu übertragen, der dazu ausgelegt ist, das Bild in Richtung einer Wand (150) des ersten Raums (A) zu projizieren, an der der erste Anzeigeabschnitt (120A) eingerichtet ist, und den ersten Projektionsabschnitt (170B) zu stoppen.

9. Vorrichtung (100) nach Anspruch 8, wobei der Schnittstellenabschnitt (105) dazu ausgelegt ist, ein Bild von einem dritten Bildaufnahmeabschnitt (180A) zu empfangen, der ein Bild von Teilnehmern aufnimmt, die im ersten Raum (A) anwesend sind; und dazu ausgelegt ist, ein Bild von einem vierten Bildaufnahmeabschnitt (180B) zu empfangen, der ein Bild von Teilnehmern aufnimmt, die im zweiten Raum (B) anwesend sind,
der Steuerabschnitt (110) ferner den Schnittstellenabschnitt (105) steuert, um das durch den vierten Bildaufnahmeabschnitt (180B) aufgenommene Bild zum ersten Anzeigeabschnitt (120A) zu übertragen, es in einem Teil eines Anzeigebereichs (121A) anzeigt, und das durch den dritten Bildaufnahmeabschnitt (180A) aufgenommene Bild zum zweiten Anzeigeabschnitt (120B) zu übertragen, in einem Teil eines Anzeigebereichs (121B).

10. Vorrichtung (100) nach einem der Ansprüche 8 bis 9, wobei der Schnittstellenabschnitt (105) dazu ausgelegt ist, Tondaten zu empfangen, die durch ein Mikrophon (460) erfasst werden, das dazu ausgelegt ist, Sprache des Vortragenden (500) zu erfassen,
wobei der Steuerabschnitt (110) ferner eine Übersetzung der Sprache des Vortragenden (500), die durch das Mikrophon (460) erfasst wird, in eine andere Sprache erhält, und den Schnittstellenabschnitt (105) steuert, um die Sprache des Vortragenden (500), die durch das Mikrophon (460) erfasst wird, an einen ersten Lautsprecher (470) auszugeben, der im ersten Raum (A) eingerichtet ist, und die durch die Übersetzung erhaltene Sprache an einen zweiten Lautsprecher (470) auszugeben, der im zweiten Raum (B) eingerichtet ist.

11. Vorrichtung (100) nach einem der Ansprüche 8 bis 10,
wobei der Schnittstellenabschnitt (105) dazu ausgelegt ist, ein Bild der Teilnehmer zu empfangen, die im ersten Raum (A) anwesend sind, das durch einen dritten Bildaufnahmeabschnitt (180A) aufgenommen wird, ein Bild der Teilnehmer zu empfangen, die im zweiten Raum (B) anwesend sind, das durch einen vierten Bildaufnahmeabschnitt (180B) aufgenommen wird,
der Steuerabschnitt (110) ferner die Anwesenheit der jeweiligen Teilnehmer auf der Basis der empfangenen Bilder der Gesichter des Teilnehmers, der an dem Vortrag teilnimmt, bestimmt.

12. Vorrichtung (100) nach einem der Ansprüche 8 bis 11,
wobei der Schnittstellenabschnitt (105) dazu ausgelegt ist, ein Bild der Teilnehmer zu empfangen, die im ersten Raum (A) anwesend sind, das durch einen dritten Bildaufnahmeabschnitt (180A) aufgenommen wird, ein Bild der Teilnehmer zu empfangen, die im zweiten Raum (B) anwesend sind, das durch einen vierten Bildaufnahmeabschnitt (180B) aufgenommen wird, und eine Vielzahl von Vibratoren (510) zu steuern, die dazu ausgelegt sind, den jeweiligen Teilnehmern eine Vibration zu erteilen,
der Steuerabschnitt (110) ferner auf der Basis der Bilder, die durch den dritten Bildaufnahmeabschnitt (180A) und den vierten Bildaufnahmeabschnitt (180B) aufgenommen werden, einen Teilnehmer festlegt, der für eine feste Zeitdauer nach unten blickt, und den Schnittstellenabschnitt (105) steuert, um dem festgelegten Teilnehmer eine Vibration zu erteilen.

13. Speichermedium (104) mit einem darin gespeicherten Computerprogramm (152), wobei das Computerprogramm (152) bewirkt, dass ein Computer eine Verarbeitung ausführt zum:
Steuern eines ersten Anzeigeabschnitts (120A), der in einem ersten Raum (A) eingerichtet ist, um ein Material eines Vortrags anzuzeigen;
Steuern eines zweiten Anzeigeabschnitts (120B), der in einem zweiten Raum (B) eingerichtet ist, um ein Material mit einem Inhalt anzuzeigen, der derselbe wie der Inhalt des Materials ist;
Empfangen eines Bildes von einem ersten Bildaufnahmeabschnitt (160A), der ein Bild eines Vortragenden (500) aufnimmt, der im ersten Raum (A) anwesend ist;
Empfangen eines Bildes von einem zweiten Bildaufnahmeabschnitt (160B), der ein Bild des Vortragenden (500) aufnimmt, wenn er im zweiten Raum (B) anwesend ist;
Erzeugen eines Bildes, das durch Segmentieren des Bildes des Vortragenden (500) aus dem Bild, das durch den ersten Bildaufnahmeabschnitt (160A) empfangen wird, gebildet wird; Empfangen von Informationen, die die Detektion des Durchtritts des Vortragenden angeben, von einem Sensor (11, 12), der in einem Durchgang zwischen dem ersten Raum (A) und dem zweiten Raum (B) eingerichtet ist und den Durchtritt des Vortragenden detektiert;
Übertragen des erzeugten Bildes zu einem ersten Projektionsabschnitt (170B), der ein Bild in Richtung einer Wand (150) des zweiten Raums (B) projiziert, an der der zweite Anzeigeabschnitt (120B) eingerichtet ist, wenn der Vortragende (500) sich im ersten Raum (A) befindet, und Empfangen eines Bildes vom zweiten Bildaufnahmeabschnitt (160B) und Erzeugen eines Bildes, das durch Segmentieren des Bildes des Vortragenden (500) gebildet wird, das vom zweiten Bildaufnahmeabschnitt (160B) empfangen wird, Übertragen des erzeugten Bildes zu einem zweiten Projektionsabschnitt (170A), um ein Material mit einem Inhalt anzuzeigen, der derselbe wie der Inhalt des Materials des Vortrags ist, und Stoppen des ersten Bildaufnahmeabschnitts (160A) und des ersten Projektionsabschnitts (170B), wenn die Informationen, die die Detektion des Durchtritts des Vortragenden (500) angeben, vom Sensor (11, 12) empfangen wurden.

## Revendications

1. Dispositif de conférence (1) comprenant :
une première section d'affichage (120A) placée sur une surface latérale d'une paroi (150) qui divise une pièce en deux salles (A, B), agencée de manière à être vue par des participants présents dans une première salle (A), qui est l'une des deux salles en lesquelles la pièce est divisée,
et configurée de manière à afficher un matériau d'une conférence ;
une seconde section d'affichage (120B) placée sur une surface latérale du côté opposé de la surface de la paroi (150) sur laquelle la première section d'affichage (120A) est placée, agencée de manière à être vue par des participants présents dans une seconde salle (B), qui est l'autre salle des deux salles en lesquelles une pièce est divisée,
et configurée de manière à afficher un matériau comportant le même contenu que le contenu du matériau affiché par la première section d'affichage (120A) ;
une première section d'acquisition d'image (160A) disposée dans la première salle (A) et configurée de manière à acquérir une image d'un conférencier (500) ;
un serveur (100) configuré de manière à recevoir l'image acquise par la première section d'acquisition d'image (160A) et à créer une image formée par segmentation de l'image du conférencier (500) ; et
une première section de projection (170B) configurée de manière à projeter l'image créée par le serveur (100) sur la paroi (150) de la seconde salle (B) et comprenant, en outre :
un capteur (11, 12) placé dans un passage entre la première salle (A) et la seconde salle (B) et configuré de manière à détecter le passage du conférencier (500) ;
une deuxième section d'acquisition d'image (160B) disposée dans la seconde salle (B) et configurée de manière à acquérir une image du conférencier (500) ; et
une seconde section de projection (170A) configurée de manière à projeter, sur la paroi (150) de la première salle (A), une image créée par le serveur (100) sur la base de l'image acquise par la deuxième section d'acquisition d'image (160B), dans lequel
lorsque le capteur (11, 12) détecte le passage du conférencier (500), le serveur (100) démarre la deuxième section d'acquisition d'image (160B), arrête la première section d'acquisition d'image (160A), reçoit l'image acquise par la deuxième section d'acquisition d'image (160B), crée une image formée par segmentation de l'image du conférencier (500),
transmet l'image créée à la seconde section de projection (170A) et arrête ladite première section de projection (170B).

2. Dispositif (1) selon la revendication 1, comprenant, en outre :
une troisième section d'acquisition d'image (180A) configurée de manière à acquérir une image des participants présents dans la première salle (A) ; et
une quatrième section d'acquisition d'image (180B) configurée de manière à acquérir une image des participants présents dans la seconde salle (B).

3. Dispositif (1) selon la revendication 2, dans lequel :
la première section d'affichage (120A) affiche, dans une partie d'une zone d'affichage (121A), l'image acquise par la quatrième section d'acquisition d'image (180B), et
la seconde section d'affichage (120B) affiche, dans une partie d'une zone d'affichage (121B), l'image acquise par la troisième section d'acquisition d'image (180A).

4. Dispositif (1) selon l'une quelconque des revendications 1 à 3, comprenant, en outre :
un microphone (460) configuré de manière à collecter la voix du conférencier (500) ;
un premier haut-parleur (470) placé dans la première salle (A) et configuré de manière à délivrer la voix du conférencier (500) collectée par le microphone (460) ; et
un second haut-parleur (470) placé dans la seconde salle (B) et configuré de manière à délivrer une voix obtenue en traduisant la voix du conférencier (500) collectée par le microphone (460) dans une autre langue.

5. Dispositif (1) selon la revendication 4, dans lequel le serveur (100) reçoit des données de la voix du conférencier (500) collectée par le microphone (460), traduit les données dans l'autre langue et délivre les données de voix traduites au second haut-parleur (470).

6. Dispositif (1) selon l'une quelconque des revendications 2 à 5, dans lequel le serveur (100) reçoit les images acquises par la troisième section d'acquisition d'image (180A) et la quatrième section d'acquisition d'image (180B) et détermine l'attention des participants respectifs sur la base d'images de visages des participants qui participent à la conférence.

7. Dispositif (1) selon l'une quelconque des revendications 2 à 6, comprenant, en outre, une pluralité de vibreurs (510) configurés afin de communiquer des vibrations aux participants respectifs et de vibrer à la réception d'informations du serveur (100), dans lequel
le serveur (100) spécifie, sur la base des images acquises par la troisième section d'acquisition d'image (180A) et la quatrième section d'acquisition d'image (180B), un participant regardant vers le bas pendant une période fixe et transmet les informations au vibreur (510) du participant indiqué.

8. Dispositif de traitement d'information (100) comprenant :
une section d'interface (105) configurée de manière à recevoir une image à partir d'une première section d'acquisition d'image (160A) qui acquiert une image d'un conférencier (500) présent dans une première salle (A) ; et
une section de commande (110) configurée de manière à commander une première section d'affichage (120A) placée dans la première salle (A) afin d'afficher un matériau d'une conférence, à commander une seconde section d'affichage (120B) placée dans une seconde salle (B) afin d'afficher un matériau comportant le même contenu que le contenu du matériau, à créer une image obtenue par segmentation de l'image du conférencier (500) à partir de l'image reçue par la section d'interface (105), et à commander la section d'interface (105) afin de transmettre l'image créée à une première section de projection (170B) qui est configurée de manière à projeter une image sur une paroi (150) de la seconde salle (B) sur laquelle la seconde section d'affichage (120B) est placée, dans lequel
ladite section d'interface (105) est, en outre, configurée de manière à recevoir des informations indiquant la détection du passage du conférencier (500) à partir d'un capteur (11, 12), qui est placé dans un passage entre la première salle (A) et la seconde salle (B) et détecte le passage du conférencier (500), et à recevoir une image à partir de ladite deuxième section d'acquisition d'image (160B), qui est disposée dans la seconde salle (B) et acquiert une image du conférencier (500), et
dans lequel ladite section de commande (110) est, en outre, configurée de manière à démarrer la deuxième section d'acquisition d'image (160B) et à arrêter la première section d'acquisition d'image (160A), lorsque ladite section d'interface (105) reçoit lesdites informations à partir dudit capteur (11, 12), afin de créer, lorsque la section d'interface (105) reçoit lesdites informations à partir du capteur (11, 12), une image formée par segmentation de l'image du conférencier (500) à partir de l'image acquise par la deuxième section d'acquisition d'image (160B) et à commander la section d'interface (105) afin de transmettre l'image créée à la seconde section de projection (170A) qui est configurée de manière à projeter l'image sur une paroi (150) de la première salle (A) sur laquelle la première section d'affichage (120A) est placée et à arrêter ladite première section de projection (170B).

9. Dispositif (100) selon la revendication 8, dans lequel la section d'interface (105) est configurée de manière à recevoir une image à partir d'une troisième section d'acquisition d'image (180A) qui acquiert une image de participants présents dans la première salle (A) ; et est configurée de manière à recevoir une image à partir d'une quatrième section d'acquisition d'image (180B) qui acquiert une image de participants présents dans la seconde salle (B),
la section de commande (110) commande, en outre, la section d'interface (105) afin de transmettre l'image acquise par la quatrième section d'acquisition d'image (180B) à la première section d'affichage (120A) dans une partie d'une zone d'affichage (121A), et de transmettre l'image acquise par la troisième section d'acquisition d'image (180A) à la seconde section d'affichage (120B), dans une partie d'une zone d'affichage (121B).

10. Dispositif (100) selon l'une quelconque des revendications 8 à 9,
dans lequel la section d'interface (105) est configurée de manière à recevoir des données sonores collectées par un microphone (460) configuré de manière à collecter la voix du conférencier (500),
la section de commande (110) obtient, en outre, une traduction de la voix du conférencier (500) collectée par le microphone (460) dans une autre langue et commande la section d'interface (105) afin de délivrer la voix du conférencier (500) collectée par le microphone (460) à un premier haut-parleur (470) placé dans la première salle (A), et de délivrer la voix obtenue par la traduction à un second haut-parleur (470) placé dans la seconde salle (B).

11. Dispositif (100) selon l'une quelconque des revendications 8 à 10,
dans lequel la section d'interface (105) est configurée de manière à recevoir une image des participants présents dans la première salle (A) acquise par une troisième section d'acquisition d'image (180A), à recevoir une image des participants présents dans la seconde salle (B) acquise par une quatrième section d'acquisition d'image (180B),
la section de commande (110) détermine, en outre, l'attention des participants respectifs sur la base des images reçues des visages de participants qui participent à la conférence.

12. Dispositif (100) selon l'une quelconque des revendications 8 à 11,
dans lequel la section d'interface (105) est configurée de manière à recevoir une image des participants présents dans la première salle (A) acquise par une troisième section d'acquisition d'image (180A), à recevoir une image des participants présents dans la seconde salle (B) acquise par une quatrième section d'acquisition d'image (180B) et à commander une pluralité de vibreurs (510) configurés afin de délivrer des vibrations aux participants respectifs,
la section de commande (110) spécifie, en outre, sur la base des images acquises par la troisième section d'acquisition d'image (180A) et la quatrième section d'acquisition d'image (180B), un participant regardant vers le bas pendant une période fixe et commande la section d'interface (105) afin de délivrer des vibrations au participant spécifié.

13. Support de mémorisation (104) à l'intérieur duquel est mémorisé un programme informatique (152), le programme informatique (152) conduisant un ordinateur à exécuter un traitement afin d'assurer :
la commande d'une première section d'affichage (120A) placée dans une première salle (A) afin d'afficher un matériau d'une conférence ;
la commande d'une seconde section d'affichage (120B) placée dans une seconde salle (B) afin d'afficher un matériau comportant le même contenu que le contenu du matériau ;
la réception d'une image à partir d'une première section d'acquisition d'image (160A) qui acquiert une image du conférencier (500) présent dans la première salle (A) ;
la réception d'une image à partir d'une deuxième section d'acquisition d'image (160B) qui acquiert une image dudit conférencier (500) lorsqu'il est présent dans la seconde salle (B) ;
la création d'une image formée par segmentation de l'image du conférencier (500) à partir de l'image reçue par ladite première section d'acquisition d'image (160A) ; la réception des informations indiquant la détection du passage du conférencier à partir d'un capteur (11, 12) qui est placé dans un passage entre la première salle (A) et la seconde salle (B) et détecte le passage du conférencier ;
la transmission de ladite image créée à une première section de projection (170B) qui projette une image sur une paroi (150) de la seconde salle (B) sur laquelle la seconde section d'affichage (120B) est placée lorsque ledit conférencier (500) est dans ladite première salle (A) et la réception d'une image à partir de ladite deuxième section d'acquisition d'image (160B) et la création d'une image formée par segmentation de l'image du conférencier (500) reçue à partir de ladite deuxième section d'acquisition d'image (160B), la transmission de l'image créée à une seconde section de projection (170A) afin d'afficher un matériau comportant le même contenu que le contenu du matériau de la conférence et l'arrêt de ladite première section d'acquisition d'image (160A) et de ladite première section de projection (170B) lorsque lesdites informations indiquant la détection du passage du conférencier (500) dudit capteur (11, 12) ont été reçues.
